# EUROPÄISCHE PATENTSCHRIFT

(11) **EP 1 294 131 B1**
(45) Veröffentlichungstag und Bekanntmachung des Hinweises auf die Patenterteilung: **02.03.2011**
(21) Anmeldenummer: 02017488.4
(22) Anmeldetag: 05.08.2002
(51) Int. Cl.: H04L 12/40, H04L 12/403

(54) **Priorisierung von Verbindungen**
Prioritisation of connections
Etablissement des priorités des connexions

(30) Priorität: 16.08.2001 DE 10140044
(43) Veröffentlichungstag der Anmeldung: 19.03.2003
(73) Patentinhaber: SIEMENS AKTIENGESELLSCHAFT, 80333 München (DE)
(72) Erfinder: Thoneick, Simone, 91052 Erlangen (DE)

(56) Entgegenhaltungen:
- EP-A- 1 111 848
- WO-A-98/59464
- US-A- 4 818 985

## Beschreibung

Die Erfindung betrifft ein Verfahren zur Priorisierung von Verbindungen eines Bussystems zwischen Kommunikationspartnern eines Automatisierungssystems.

Der Datenaustausch zwischen Automatisierungssystemen und zwischen einem Automatisierungssystem und einer Bedien- und Beobachtungsstation findet aus Applikationssicht mit Applikationsverbindungen, z. B. sogenannten Ebene-5-Verbindungen, statt. Bei hochverfügbaren Verbindungen (H-Verbindungen) wird eine Applikationsverbindung auf zwei Ebene-4-Verbindungen abgebildet. Die Wahl der verwendeten Kombination von Ebene-4-Verbindungen erfolgt üblicherweise aufgrund von den einzelnen Verbindungen zugeordneten Prioritäten. Ein Ausfall mehrerer Ebene-4-Verbindungen kann zum Ausfall einer Applikationsverbindung führen, obwohl noch genügend Ebene-4-Verbindungen zur Aufrechterhaltung der Verbindung verfügbar wären.

Aus der Druckschrift EP 1 111 848 A2 - Schmidt "Vermittlungseinrichtung und Verfahren zur Vermittlung von Daten" sind eine Anordnung und ein Verfahren bekannt, bei denen mehrere Geräte auf ein gemeinsames Bussystem zugreifen. Dabei ist vorgesehen, dass die Übertragung hoch priorisierter Daten gesondert überwacht wird, wobei im Falle wiederholter Fehlübertragungen auf ein zweites, redundantes Bussystem umgeschaltet wird.

Die Druckschrift WO98/59464 - Jantzen "Redundanter Serienbus und Verfahren zu dessen Betrieb zeigt die gleichzeitige Datenübertragung über zwei redundante Bussysteme, wobei Empfängerseitig jeweils auf dem störungsfreien der Bussysteme empfangen wird.

Auch die Druckschrift US 4,818,985 - Ikeda "Bus arbitration network capable of quickly carrying out arbitration among bus msters" zeigt ein Bussystem mit redundanten Bussen, bei denen jeweils ein Bus in Abhängigkeit von der Priorität der zu übermittelnden Daten ausgewählt wird.

Der Erfindung liegt die Aufgabe zugrunde, die Priorisierung von Verbindungen eines Bussystems zu verbessern.

Diese Aufgabe wird durch ein Verfahren zur Priorisierung von Verbindungen eines Bussystems zwischen Kommunikationspartnern eines Automatisierungssystems gelöst, bei welchem Verfahren allen möglichen Kombinationen von jeweils zwei von mindestens drei Verbindungen automatisch eine Priorität zugeordnet wird.

Beim erfindungsgemäßen Verfahren erfolgt die Zuordnung einer Priorität zu Kombinationen von Verbindungen zwischen Kommunikationspartnern, z. B. Automatisierungsgeräten, Bedien- und Beobachtungssystemen, etc. Diese Zuordnung erfolgt vorteilhaft in Abhängigkeit von einer Bewertung der jeweiligen Kombination. Die Bewertung erfolgt anhand von Kriterien wie Busredundanz, CPU-Redundanz, Übertragungsgeschwindigkeit, Anzahl der Router und Ähnlichem, d. h. anhand von Kriterien, die die Charakteristik der jeweiligen Kombination erfassen und applikationsspezifisch gewichten. Beispielsweise können so die Busredundanz und/oder die CPU-Redundanz gezielt berücksichtigt werden. Für bestimmte Kommunikationspartner ist die Busredundanz wichtiger als die CPU-Redundanz, für andere Kommunikationspartner ist die CPU-Redundanz wichtiger. Je nach Kommunikationspartnern kann also bei der einen H-Verbindung eine Kombination von Verbindungen eine erste Priorität haben, bei einer anderen H-Verbindung kann die gleiche Verbindungskombination aber eine andere zweite Priorität haben. Dies kann nun individuell berücksichtigt werden durch eine Priorisierung der Kombinationen.

In einer vorteilhaften Ausgestaltung der Erfindung sind die mindestens drei Verbindungen als Ebene-4-Verbindungen ausgebildet und jeweils zwei Ebene-4-Verbindungen realisieren eine hochverfügbare Applikationsverbindung. Die Prioritäten werden dann nicht pro Ebene-4-Verbindung vergeben, sondern es wird zwei Ebene-4-Verbindungen als "Päckchen" eine Priorität zugeordnet. Damit kann bei der 4-Wege-Projektierung jedem möglichen Paar eine Priorität zugeordnet werden, die auch Aspekte wie Busredundanz oder CPU-Redundanz berücksichtigt.

Besondere Vorteile bietet das vorgeschlagene Verfahren beim Einsatz in der Prozessautomatisierung, da durch die Priorisierung von hochverfügbaren Kombinationen von Verbindungen eine flexiblere Reaktion auf den Ausfall einer oder mehrerer Verbindungen und damit eine Erhöhung der Verfügbarkeit der hochverfügbaren Verbindung zwischen den Kommunikationspartnern erreicht wird. Der automatisierte Prozess wird somit seltener aufgrund eines Verbindungsausfalls gestört oder sogar unterbrochen.

Nachfolgend wird die Erfindung anhand des in den Figuren dargestellten Ausführungsbeispiels näher beschrieben und erläutert.

Es zeigen:
- FIG 1: schematisch den Aufbau einer hochverfügbaren Verbindung und
- FIG 2: ein hochverfügbares Automatisierungssystem mit mehreren Verbindungen.

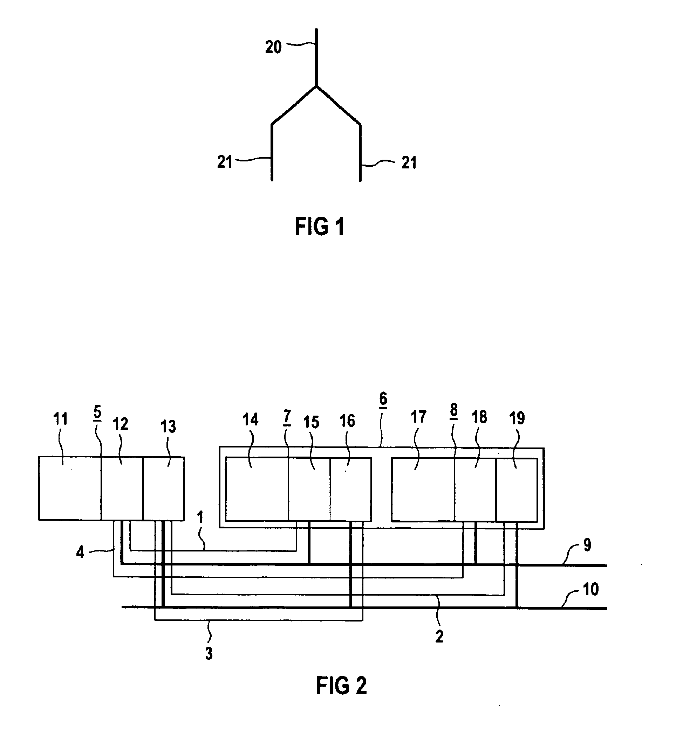

FIG 1 zeigt eine schematische Darstellung des Aufbaus einer hochverfügbaren Verbindung. Eine Applikationsverbindung ist mit dem Bezugszeichen 20, zwei Ebene-4-Verbindungen sind mit dem Bezugszeichen 21 gekennzeichnet. Der Datenaustausch zwischen Kommunikationspartnern, z. B. zwischen Automatisierungssystemen oder wie im Ausführungsbeispiel zwischen Automatisierungsgeräten eines Automatisierungssystems und einem Bedien- und Beobachtungssystem findet aus Applikationssicht mit Applikationsverbindungen 20 statt. Bei hochverfügbaren Verbindungen (H-Verbindungen) wird eine Applikationsverbindung 20 auf zwei Ebene-4-Verbindungen 21 abgebildet. Bei Unterbrechung einer dieser Ebene-4-Verbindungen 21 kann die Applikationsverbindung 20 direkt auf der anderen Ebene-4-Verbindung 21 weiter kommunizieren, ohne dass die Applikation dies merkt. Die zwei aufgebauten Ebene-4-Verbindungen 21 werden aus einer Liste von (heute) bis zu vier projektierten Ebene-4-Verbindungen anhand eines Indizes ausgewählt. In dieser Liste wird jedem Index und damit jeder Ebene-4-Verbindung eine Priorität P1 bis P4 zugeordnet und es werden immer die Projektierungen mit der höchsten Priorität P1 bis P4 aufgebaut. Die Zuordnungen einer solchen Liste zeigt die folgende Tabelle 1.

**Tabelle 1:**

| | | | | |
|---|---|---|---|---|
| Index 1 | X | | | |
| Index 2 | | X | | |
| Index 3 | | | X | |
| Index 4 | | | | X |
| Priorität | P1 | P2 | P3 | P4 |

FIG 2 zeigt ein Ausführungsbeispiel eines hochverfügbaren Automatisierungssystems mit mehreren Verbindungen. Ein hochverfügbares Automatisierungssystem 6 ist über zwei Busse 9, 10 mit einem Bedien- und Beobachtungssystem 5 verbunden. Das hochverfügbare Automatisierungssystem 6 enthält zwei redundante Automatisierungsgeräte 7 und 8. Jedes dieser Automatisierungsgeräte 7, 8 enthält eine Prozessoreinheit 14 bzw. 17 sowie Kommunikationsbaugruppen 15, 16 sowie 18, 19. Bei den Prozessoreinheiten 14, 17 handelt es sich um sogenannte Central Processing Units, abgekürzt CPU. Das Bedien- und Beobachtungssystem 5 enthält neben der eigentlichen Bedien- und Beobachtungsstation 11 Kommunikationsbaugruppen 12, 13. Die Kommunikationsbaugruppen 12, 13, 15, 16, 18, 19 dienen der Anbindung der Kommunikationspartner, in diesem Fall des Bedien- und Beobachtungssystems 5 bzw. der Automatisierungsgeräte 7, 8, an die Busse 9, 10. Jeweils die ersten der Kommunikationsbaugruppen 12, 15, 18 des Bedien- und Beobachtungssystems 5 bzw. der Automatisierungsgeräte 7, 8 sind über den ersten Bus 9 verbunden. Die jeweils zweiten Kommunikationsbaugruppen 13, 16, 19 sind über den zweiten Bus 10 miteinander verbunden. Es ergeben sich somit vier mögliche Verbindungen zwischen dem Bedien- und Beobachtungssystem 5 und dem hochverfügbaren Automatisierungssystem 6, welche mit den Bezugszeichen 1 bis 4 gekennzeichnet sind und im Ausführungsbeispiel als Ebene-4-Verbindungen ausgebildet sind.

Im in FIG 2 dargestellten Ausführungsbeispiel wird jeder der vier möglichen Verbindungen 1 bis 4 ein entsprechender Index 1 bis 4 zugeordnet. Entsprechend der Tabelle 1 wird jedem dieser Indizes 1 bis 4 eine Priorität P1 bis P4 zugeordnet. Dabei entspricht P1 der höchsten Priorität, P4 der niedrigsten Priorität. Die H-Verbindung wird somit idealerweise mit den Verbindungen 1 und 2, d. h. mit den Indizes 1 bzw. 2 aufgebaut. Fällt nun die zweite Kommunikationsbaugruppe 19 des zweiten Automatisierungsgeräts 8 aus, bricht die Ebene-4-Verbindung mit Index 2 ab. Bei bisherigen Systemen wird dann automatisch die Ebene-4-Verbindung mit dem Index 3 aufgebaut. Das aber führt dazu, dass die CPU-Redundanz (Central Processing Unit-Redundanz) der beiden Automatisierungsgeräte 7, 8 nicht mehr gegeben ist. Einzig die Busredundanz mit den beiden Bussen 9, 10 wäre noch gewährleistet. Wird aber nun die Prozessoreinheit 14 des ersten Automatisierungsgeräts 7 ausgeschaltet, bricht die gesamte H-Verbindung zusammen, obwohl theoretisch über die erste Kommunikationsbaugruppe 18 des zweiten Automatisierungsgeräts 8 noch eine Verbindung zum Bedien- und Beobachtungssystem 5 gehalten werden könnte. In einem solchen Fall wird bei bisherigen Systemen ein Abbruch in Kauf genommen, d. h. kurzzeitig bricht eine Applikationsverbindung weg, wird aber danach wieder aufgebaut. Ein solcher Abbruch kann zu Störungen in der Prozessreaktion führen. Bei dem hier vorgeschlagenen Verfahren wird der genannte Nachteil vermieden. Die Prioritäten werden nicht pro Ebene-4-Verbindung vergeben, sondern es wird jeweils zwei Ebene-4-Verbindungen als "Päckchen" eine Priorität zugeordnet. Damit kann bei der Vier-Wege-Projektierung jedem möglichen Paar eine Priorität zugeordnet werden, die auch Aspekte wie Busredundanz oder CPU-Redundanz berücksichtigt. Für das in FIG 2 dargestellte Ausführungsbeispiel könnte eine solche Zuordnung wie in der folgenden Tabelle 2 dargestellt aussehen.

**Tabelle 2:**

| | | | | | | | | | | |
|---|---|---|---|---|---|---|---|---|---|---|
| Index 1 | X | | X | X | | | X | | | |
| Index 2 | X | | | | X | X | | X | | |
| Index 3 | | X | X | | X | | | | X | |
| Index 4 | | X | | X | | X | | | | X |
| Busredundanz | X | X | X | | | X | | | | |
| CPU-Redundanz | X | X | | X | X | | | | | |
| Priorität | P1 | P1 | P3 | P2 | P2 | P3 | P4 | P4 | P4 | P4 |

Den einzelnen Verbindungen 1 bis 4 ist wiederum der Index 1 bis 4 zugeordnet. Bei vier möglichen Verbindungen 1 bis 4 gibt es sechs verschiedene Kombinationsmöglichkeiten von jeweils zwei dieser vier Verbindungen. Des Weiteren könnte jede der vier Verbindungen 1 bis 4 einzeln zum Einsatz kommen. Insgesamt ergeben sich somit zehn verschiedene mögliche Konstellationen des Aufbaus einer Applikationsverbindung mit einer oder zwei Ebene-4-Verbindungen aus vier möglichen Ebene-4-Verbindungen. Dementsprechend enthält Tabelle 2 zehn Spalten in denen jeweils die verwendeten Verbindungen in der entsprechenden Zeile mit einem X gekennzeichnet sind. In zwei weiteren Zeilen der Tabelle 2 ist angegeben, ob die so gewählte Kombinationsmöglichkeit der Verbindungen eine Busredundanz bzw. eine CPU-Redundanz gewährleisten kann. Schließlich wurde jeder der möglichen Kombinationen von Verbindungen 1 bis 4 eine Priorität P1 bis P4 zugeordnet. In Tabelle 2 wurde beispielsweise die CPU-Redundanz höher bewertet als die Busredundanz, dementsprechend erhalten die Kombinationsmöglichkeiten mit reiner CPU-Redundanz die Priorität P2, hingegen die Kombinationsmöglichkeiten mit reiner Busredundanz die niedrigere Priorität P3. Sind sowohl Busredundanz als auch CPU-Redundanz gewährleistet erhält die Kombinationsmöglichkeit die höchste Priorität P1. Im schlimmsten Fall, wenn die Applikationsverbindung nur über eine der vier Verbindungen 1 bis 4 aufrechterhalten werden kann, somit weder Busredundanz noch CPU-Redundanz gewährleistet wird, wird der Verbindungskombination die niedrigste Priorität P4 zugeordnet. Im Beispielsfall ist zu erkennen, dass die Verbindung 1 mit dem Index 1 in allen Prioritäten vorkommt, es hängt somit nur von der Konstellation als solcher ab, unter welcher Priorität der Index 1 aufgebaut ist. Eine Tabelle entsprechend Tabelle 2 kann automatisch generiert werden, wenn einem Generator die Priorisierung der Eigenschaften vorgegeben wird. Für Tabelle 2 lautete diese Regel: Beide Redundanzen sind am besten, CPU-Redundanz ist besser als Busredundanz. Auch andere Eigenschaften als Busredundanz oder CPU-Redundanz sind als Kriterien für die Priorisierung denkbar.

Im Folgenden sollen die oben verwendeten Begriffe Ebene-4-und Ebene-5-Verbindung erläutert werden. Das Open Systems Interconnection Model (OSI) ist ein Denkmodell der International Standardization Organization (ISO). In diesem Schichtmodell wird der Informationsaustausch zwischen Rechnern in einem Netzwerk standardisiert beschrieben. Die Kommunikation wird dazu in sieben Schichten oder Ebenen gegliedert. Die unterste Schicht beschäftigt sich mit der physikalischen Verbindung (z. B. Draht), die oberste Ebene beschreibt die Software-Wechselwirkungen auf der Ebene der Anwendungsprogramme. Zu jeder Ebene gibt es ISO-Normen, die einzelne Systeme und Anwendungen im Detail spezifizieren. Dieses ISO/OSI-7-Schichten-Modell wird sehr häufig herangezogen, um den Aufbau von Netzwerksystemen und die darin verwendeten Netzwerkprotokolle zu beschreiben. Das liegt zum einen an dem klaren Aufbau der Funktionen in sieben Schichten, zum anderen ist es ein offizieller Standard, der auch für zukünftige Entwicklungen offen ist. Das ISO/OSI-7-Schichten-Modell definiert in jeder Schicht das Protokoll, mit dem beteiligte Rechner kommunizieren. Dabei greifen Dienste der höheren Schicht jeweils auf die nächstniedrigere zurück. Die Ebene-4-Verbindung ist der Ebene 4, der sogenannten Transportschicht zugeordnet, welche Aufbau und Unterhaltung einer Verbindung zwischen zwei Endsystemen, Bereitstellung eines netzunabhängigen Transportmechanismus und Adressierung eines Endteilnehmers beschreibt. Für Ebene-5-Verbindungen, d. h. Verbindungen der Ebene 5, der sogenannten Sitzungsschicht, wird auf der Basis der logischen Verbindung das Konzept einer Sitzung (engl.: Session) eingeführt. Diese beinhaltet Synchronisation von Datenübertragung über mehrere Verbindungen (d. h. etwa im Falle eines Zusammenbruchs einer Verbindung) sowie die Verwaltung von Ressourcen, die nur je ein Kommunikationspartner 5, 7, 8 verwenden kann (Halbduplex--Verbindungen).

Zusammengefasst betrifft die Erfindung somit ein Verfahren zur Priorisierung von Verbindungen eines Bussystems zwischen Kommunikationspartnern 5, 7, 8 eines Automatisierungssystems 5, 6. Die Priorisierung wird verbessert, indem allen möglichen Kombinationen von jeweils zwei von mindestens drei Verbindungen 1...4 automatisch eine Priorität P1...P4 zugeordnet wird.

## Patentansprüche

1. Verfahren zur Priorisierung von Verbindungen eines Bussystems aus zwei Bussen (9, 10) zwischen Kommunikationspartnern (5, 7, 8) mit redundanten CPU's (14, 17) eines Automatisierungssystems (5, 6),
wobei jeweils zwei redundante Verbindungen (1...4) zwischen den Kommunikationspartnern (5, 7, 8) aufgebaut sind,
bei welchem Verfahren allen möglichen Kombinationen von jeweils zwei von mindestens drei Verbindungen (1...4) über die Busse (9, 10) automatisch eine Priorität (P1...P4) zugeordnet wird,
wobei die zwei Verbindungen (1...4) aus der Kombination mit der höchsten Priorität aufgebaut werden,
**dadurch gekennzeichnet,**
**dass** die Zuordnung der Priorität (P1...P4) zu einer Kombination in Abhängigkeit von einer Bewertung der jeweiligen Kombination erfolgt,
wobei in Abhängigkeit der im Verfahren verwendeten Kommunikationspartner (5, 7, 8) bei der Bewertung der jeweiligen Kombination die Kriterien Busredundanz und CPU-Redundanz unterschiedlich stark gewichtet werden.

2. Verfahren nach Anspruch 1,
**dadurch gekennzeichnet,**
**dass** als aktive Verbindungen für einen Datenaustausch zwischen den Kommunikationspartnern (5, 7, 8) die zwei Verbindungen (1...4) der Kombination, welcher unter allen Kombinationen mit zwei verfügbaren Verbindungen die höchste Priorität (P1...P4) zugeordnet ist, gewählt werden.

3. Verfahren nach einem der vorhergehenden Ansprüche,
**dadurch gekennzeichnet,**
**dass** als aktive Verbindung für einen Datenaustausch zwischen den Kommunikationspartnern (5, 7, 8) eine erste Verbindung (1...4) gewählt wird, wenn nur die erste Verbindung (1...4) verfügbar ist.

4. Verfahren nach einem der vorhergehenden Ansprüche,
**dadurch gekennzeichnet,**
**dass** die Zuordnung von Prioritäten (P1...P4) zu Kombinationen durch eine automatische, regelbasierte Generierung mindestens einer Tabelle erfolgt.

5. Verfahren nach einem der vorhergehenden Ansprüche,
**dadurch gekennzeichnet,**
**dass** die mindestens drei Verbindungen (1...4) als Ebene-4-Verbindungen (21) ausgebildet sind, wobei jeweils zwei Ebene-4-Verbindungen (21) eine hochverfügbare Applikationsverbindung (20) realisieren.

6. Verfahren nach einem der vorhergehenden Ansprüche,
**dadurch gekennzeichnet,**
**dass** ein Wechsel zwischen den als aktive Verbindungen für den Datenaustausch zwischen den Kommunikationspartnern (5, 7, 8) gewählten Verbindungen (1...4) ohne Unterbrechung des Datenaustauschs erfolgt.

7. Verfahren nach einem der vorhergehenden Ansprüche,
**dadurch gekennzeichnet,**
**dass** das Verfahren zur Priorisierung von Verbindungen eines Bussystems zwischen Kommunikationspartnern (5, 7, 8) eines Automatisierungssystems in der Prozessautomatisierung verwendet wird.

## Claims

1. Method for the prioritization of connections in a bus system comprising two buses (9, 10) between communication partners (5, 7, 8) with redundant CPUs (14, 17) in an automation system (5, 6),
wherein two respective redundant connections (1...4) are set up between the communication partners (5, 7, 8),
which method involves a priority (P1...P4) being automatically assigned to all the possible combinations of two respective instances of at least three connections (1...4) via the buses (9, 10),
wherein the two connections (1...4) are set up from the combination with the highest priority,
**characterized**
**in that** the priority (P1...P4) is assigned to a combination on the basis of an assessment of the respective combination, wherein the assessment of the respective combination involves the criteria of bus redundancy and CPU redundancy being weighted at different levels on the basis of the communication partners (5, 7, 8) used in the method.

2. Method according to Claim 1,
**characterized**
**in that** the active connections chosen for data interchange between the communication partners (5, 7, 8) are the two connections (1...4) of the combination which has been assigned the highest priority (P1...P4) among all the combinations with two available connections.

3. Method according to one of the preceding claims,
**characterized**
**in that** the active connection chosen for data interchange between the communication partners (5, 7, 8) is a first connection (1...4) if only the first connection (1...4) is available.

4. Method according to one of the preceding claims,
**characterized**
**in that** priorities (P1...P4) are assigned to combinations by means of automatic, rule-based generation of at least one table.

5. Method according to one of the preceding claims,
**characterized**
**in that** the at least three connections (1...4) are in the form of level-4 connections (21), wherein two respective level-4 connections (21) produce a highly available application connection (20).

6. Method according to one of the preceding claims,
**characterized**
**in that** a change between the connections (1...4) chosen as active connections for the data interchange between the communication partners (5, 7, 8) is made without interrupting the data interchange.

7. Method according to one of the preceding claims,
**characterized**
**in that** the method is used for the prioritization of connections in a bus system between communication partners (5, 7, 8) in an automation system in process automation.

## Revendications

1. Procédé d'établissement de priorités de connexions d'un système de bus composé de deux bus ( 9, 10 ) entre des partenaires ( 5, 7, 8 ) de communication ayant des CPU ( 14, 17 ) redondantes, d'un système ( 5, 6 ) d'automatisation,
dans lequel on forme respectivement deux connexions ( 1... 4 ) redondantes entre les partenaires ( 5, 7, 8 ) de communication,
procédé dans lequel on affecte à toutes les combinaisons possibles de respectivement deux d'au moins trois connexions ( 1. . . 4 ) par les bus ( 9, 10 ) automatiquement une priorité ( P1. . .P4 ),
dans lequel on forme les deux connexions ( 1. . .4 ) à partir de la combinaison ayant la priorité la plus grande, **caractérisé**
**en ce que** l'on effectue l'affectation de la priorité ( P1. . . P4 ) à une combinaison en fonction d'une évaluation de la combinaison respective,
dans lequel en fonction du partenaire ( 5, 7, 8 ) de communication utilisé dans le procédé, on pondère, lors de l'évaluation de la combinaison respective, les critères redondance de bus et redondance de CPU d'une manière très différente.

2. Procédé suivant la revendication 1,
**caractérisé**
**en ce que** l'on choisit, comme connexions actives pour un échange de données entre les partenaires ( 5, 7, 8 ) de communication, les deux connexions ( 1 . . . 4 ) de la combinaison à laquelle est affectée, parmi toutes les combinaisons ayant deux connexions disponibles, la priorité ( P1. . . P4 ) la plus grande.

3. Procédé suivant l'une des revendications précédentes,
**caractérisé**
**en ce que** l'on choisit, comme connexion active pour un échange de données entre les partenaires ( 5, 7, 8 ) de communication, une première connexion ( 1 . . . 4 ) lorsque seule la première connexion ( 1 . . . 4 ) est disponible.

4. Procédé suivant l'une des revendications précédentes,
**caractérisé**
**en ce qu'**on effectue l'affectation de priorité ( P1 . . . P4 ) à des combinaisons par une production automatique et fondée sur une règle d'au moins une table.

5. Procédé suivant l'une des revendications précédentes,
**caractérisé**
**en ce que** l'on forme les au moins trois connexions ( 1 . . . 4 ) sous la forme de 4 connexions ( 21 ) dans un plan, respectivement 4 connexions ( 21 ) dans un plan réalisant une connexion ( 21 ) d'application très disponible.

6. Procédé suivant l'une des revendications précédentes,
**caractérisé**
**en ce qu'**on effectue, sans interruption de l'échange de données, une alternance entre les connexions ( 1. . . 4 ) choisies comme connexions actives pour l'échange de données entre les partenaires ( 5, 7, 8 ) de communication.

7. Procédé suivant l'une des revendications précédentes,
**caractérisé**
**en ce qu'**on utilise le procédé d'établissement de priorités de connexions d'un système de bus entre les partenaires ( 5, 7, 8 ) de communication d'un système d'automatisation de processus.
